(19) Europäisches Patentamt
European Patent Office
Office européen des brevets

(11) **EP 2 681 158 B1**

(12) **EUROPÄISCHE PATENTSCHRIFT**

(45) Veröffentlichungstag und Bekanntmachung des Hinweises auf die Patenterteilung:
**18.01.2017   Patentblatt 2017/03**

(21) Anmeldenummer: **12707229.6**

(22) Anmeldetag: **21.02.2012**

(51) Int Cl.:
*C02F 1/42* $^{(2006.01)}$        *C02F 103/08* $^{(2006.01)}$

(86) Internationale Anmeldenummer:
**PCT/EP2012/000747**

(87) Internationale Veröffentlichungsnummer:
**WO 2012/116788 (07.09.2012 Gazette 2012/36)**

(54) **AUFBEREITUNG VON ROHSOLEN AUS ENTSALZUNGSANLAGEN**

TREATMENT OF RAW BRINES FROM DESALINATION PLANTS

TRAITEMENT DE SAUMURES BRUTES PROVENANT D'INSTALLATIONS DE DESSALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2011   DE 102011012805**

(43) Veröffentlichungstag der Anmeldung:
**08.01.2014   Patentblatt 2014/02**

(73) Patentinhaber: **I-E-S e.K., Inhaber Dr. Oliver Jacobs**
**49088 Osnabrück (DE)**

(72) Erfinder:
• **JACOBS, Oliver**
**49088 Osnabrück (DE)**
• **KHAMIZOV, Ruslan Khazhsetovich**
**Moskau (RU)**

(74) Vertreter: **Busse & Busse**
**PATENT- UND RECHTSANWÄLTE**
**Partnerschaft mbB**
**Grosshandelsring 6**
**49084 Osnabrück (DE)**

(56) Entgegenhaltungen:
**WO-A2-2010/123926     US-A- 5 814 224**

• **SHANG Y ET AL: "Study on adsorption of N2 and O2 by magnesium (II)-exchanged zeolite A", JOURNAL OF ALLOYS AND COMPOUNDS, ELSEVIER SEQUOIA, LAUSANNE, CH, Bd. 478, Nr. 1-2, 10. Juni 2009 (2009-06-10), Seiten L5-L7, XP026095320, ISSN: 0925-8388, DOI: 10.1016/J.JALLCOM.2008.11.082 [gefunden am 2008-11-28]**

**Beschreibung**

Die Erfindung betrifft ein Verfahren zur Aufbereitung von Rohsolen aus Entsalzungsanlagen mit einem Gesamtsalzgehalt größer 60 g/l sowie eine Vorrichtung zur Durchführung eines derartigen Verfahrens.

Es ist bekannt, Meerwasser zur Herstellung von Trinkwasser zu verwenden. Hierzu wird das Meerwasser in einer Meerwasserentsalzungsanlage in Frischwasser und in eine Rohsole getrennt. Ein bekanntes Verfahren zur Entsalzung von Meerwasser ist beispielsweise die Reverseosmose (RO), wie es beispielsweise aus der WO 2010/123926 A2 bekannt ist. Als Membran können verschiedene Materialien eingesetzt werden. Im vorgenannten Dokument wird beispielsweise eine Membran aus Zeolith A vorgeschlagen. Der Salzgehalt von Meerwasser wird mit einem derartigen Verfahren von etwa 35.000 ppm auf einen Gesamtsalzgehalt von unter 500 ppm gesenkt. Die Reverseosmose (RO) ist ein mit Druck arbeitendes Membranverfahren. Der osmotische Druck von Meerwasser beträgt 25 kg/cm$^2$. Wenn Meerwasser in einem Reverseosmose-System mit einem höheren Druck als seinem osmotischen Druck durch die Membran bedrückt wird, wird das Meerwasser in Frischwasser (Permeat) und Salzwasser (Konzentrat) aufgetrennt. Je höher der Gesamtsalzgehalt ist, desto höher ist der osmotische Druck. Hockdruckpumpen verbrauchen viel Energie und stellen bei der Herstellung von Frischwasser einen wesentlichen Kostenfaktor dar. Beim herkömmlichen Meerwasser-Reverse-Osmoseverfahren (SWRO) werden aus dem zugeführten Wasser ungefähr 42% Frischwasser gewonnen, wobei 58% Konzentrat zurückbleibt. Das Konzentrat (Rohsole) besitzt einen Gesamtsalzgehalt von ungefähr 60.000 ppm (beinahe der 1,7-fache Salzgehalt vom Meerwasser). Eine gründlichere Entsalzung ist nicht nur wegen der Druckprobleme sondern auch wegen der Probleme des Zusetzens der Membran mit Gips und anderen Härtebildnern des Meerwassers schwer zu erreichen. Diese Einschränkungen können selbst mit einer Säurevorbehandlung von unbehandeltem Meerwasser und der Zugabe von Chemikalien zur Verhindern von Ablagerungen nicht vermieden werden.

Ein weiteres Verfahren zur Herstellung von Trinkwasser aus Meerwasser ist die thermische Destillation. Zu den häufigsten Destillationsverfahren gehören die mehrstufige Entspannungsverdampfung (MSF), die Multi-Effekt-Destillation (MED) und die Dampfkompression (DK). Bei der MSF wird das zugeführte Wasser erwärmt und der Druck vermindert, so dass das Wasser schlagartig zu Dampf wird. Dieser Vorgang stellt eine Stufe von mehreren in Reihe geschalteten Stufen dar, von denen jede einen niedrigeren Druck aufweist. Bei der MED durchläuft das zugeführte Wasser mehrere in Reihe geschaltete Verdampfer. Der Dampf aus einer Reihe wird anschließend verwendet, um das Wasser in der nächsten Reihe zu verdampfen. Das DK-Verfahren umfasst die Verdampfung des zugeführten Wassers, die Kompression des Dampfs, die anschließende Verwendung des erwärmten komprimierten Dampfs als Wärmequelle zur Verdampfung von weiterem zugeführtem Wasser. Einige Destillationsanlagen sind eine Mischform aus mehr als einer Entsalzungstechnologie. Das Abfallprodukt dieser Prozesse ist eine Lösung mit einer hohen Salzkonzentration (Rohsole). Bei den herkömmlichen thermischen Destillationsprozessen werden aus dem zugeführten Wasser weniger als 47 % Frischwasser gewonnen, wobei mehr als 53 % Konzentrat zurückbleiben. Das Konzentrat besitzt einen Gesamtsalzgehalt von ungefähr 65.000 ppm (beinahe der 1,8-fache Salzgehalt von Meerwasser). Diese Einschränkungen hängen mit der Entstehung von Ablagerungen auf Heizflächen von Verdampfern aus Härtebildnern des Meerwassers, insbesondere Gips, zusammen. Wegen der anomalen Wirkung der Verringerung der Gipslöslichkeit in heißen Lösungen wird diese Einschränkung häufig als "Gipsbarriere" bezeichnet.

Um die Entstehung von Gipsablagerungen auf den Heizflächen zumindest etwas einzuschränken, ist aus der US 5,814,224 A bereits bekannt, dass das Meerwasser vor der Verdampfung mit Hilfe eines Ionenaustausches von Calciumionen befreit wird. Als Ionenaustauscher wird hierbei ein Zeolith verwendet, der mit einer Magnesiumchlorid- und einer Natriumchloridlösung bei Umgebungstemperaturen behandelt wird. Mit dem Verfahren gemäß der vorgenannten US-Patentanmeldung wird aus Meerwasser Trinkwasser gewonnen. Als Abfallprodukt verbleibt eine calciumreiche Rohsole mit einem Gesamtsalzgehalt größer 60 g/l. Diese Rohsole wird oft unmittelbar in das Meer zurückgeleitet und führt hier zu einer Versalzung mit erheblichen Umweltproblemen. Die Rohsole kann mit dem in der oben aufgeführten US-Patentanmeldung dargestellten Verfahren nicht weiter aufgearbeitet werden, da der Zeolith bereits nach wenigen Durchläufen erschöpft und verbraucht wäre und gegen neues Zeolith ausgetauscht werden müsste. Die Kosten für die ständige Erneuerung des Zeolith und auch für den personellen Aufwand zum Austausch des Zeoliths wären sehr hoch, so dass dies in der Praxis nicht durchgeführt wird oder auch nur ernsthaft in Erwägung gezogen wurde.

Keine der aufgeführten industriellen Entsalzungsverfahren ist eine umweltfreundliche Technologie und sie verursachen enorme Verunreinigungen in der Meerestier- und -pflanzenwelt. Alle Entsalzungsanlagen auf der Welt zusammengenommen leiten jährlich ungefähr 9 Kubikkilometer (9 000 000 000 m$^3$/J) Konzentrate ohne Behandlung direkt in die Küstenbereiche der Ozeane, was zu einem ökologischen Ungleichgewicht führt. Hinzu kommen ökonomische Nachteile. So enthält die ins Meer geleitete Rohsole große Mengen wertvoller Bestandteile wie Magnesium, Natrium, Kalium und seltene Metalle, die nicht genutzt werden.

Um diese Probleme einzudämmen, sind weitere Verfahren entwickelt worden, die den Anteil der anfallenden Rohsole beschränken. Die US 6508936 B1 beschreibt ein kombiniertes Verfahren zur Meerwasserentsalzung, um eine sehr hohe Ausbeute an Frischwasser zu erhalten. In dem Verfahren wird die Nanofiltration als erster Entsalzungsschritt zusammenwirkend mit einer thermischen Destillation, wie der mehrstufigen Entspannungsverdampfung (MSF) oder der Multi-Effekt-Destillation (MED), kombiniert. Nachteilig an diesem Verfahren ist jedoch, dass der Nanofiltrationsschritt verhältnismäßig teuer ist, um zu einer Senkung der Meerwasserhärte verwendet zu werden, damit bei dem Schritt der thermischen Destillation anschlie-(weiter Seite 4 der ursprünglichen Anmeldungsunterlagen) ßend mehr Frischwasser gewonnen werden kann. Auch bei diesem Verfahren fällt zudem eine Rohsole an.

Ein Verfahren zur Meerwasserentsalzung ohne Anfall einer nicht mehr weiter aufzuarbeitenden Rohsole wird in der WO 2007132477 A1 beschrieben. Bei diesem Verfahren wird das Meerwasser in einem Vorbehandlungsschritt zunächst einer Nanofiltration unterzogen, wobei bevorzugt zweiwertige Ionen entfernt werden. Die Entfernung beläuft sich dabei auf etwa 85% je Durchgang und es gelangen zudem nicht mehr als 30% der einwertigen Ionen in das Retentat. Dieses Retentat mit einem hohen Anteil an zweiwertigen Ionen wird zur Gewinnung von Magnesium und anderen zweiwertigen Ionen verwertet. Für das Permeat, dass im wesentlichen keine zweiwertigen Ionen enthält, kann eine dreistufige Hochdruckentsalzung mit Reverseosmose (HPSWRO) zur Herstellung von Frischwasser eingesetzt werden. Die hochreine Sole (HPSWRO-Konzentratstrom mit einem Gesamtsalzgehalt von über 85.000 ppm) kann mittels Elektrolyse zur Gewinnung von Natriumhydroxid, Chlor und Wasserstoff verwendet werden. Dieses Verfahren weist jedoch einige Nachteile auf. Die Nanofiltration und die mehrstufige HPSWRO erfordern einen zusätzlichen Energieaufwand und sind zudem kostenintensiv. Zudem gibt es in der Praxis erhebliche Schwierigkeiten mit der gründlichen und separaten Entfernung von Magnesium und Calcium aus dem Nanofiltrationskonzentrat.

Angesichts des vorbeschriebenen Standes der Technik liegt der Erfindung die Aufgabe zugrunde, ein Verfahren bereitzustellen, mit dem Rohsole aus Entsalzungsanlagen mit einem Gesamtsalzgehalt größer 60 g/l mit wenig Energieeinsatz und kostengünstig aufbereitet werden kann.

Die Aufgabe wird durch die erfindungsgemäße Vorrichtung gemäß Anspruch 10 sowie durch das erfindungsgemäße Verfahren zur Aufbereitung von Rohsolen aus Entsalzungsanlagen mit einem Gesamtsalzgehalt größer 60 g/l gemäß Anspruch 1 gelöst.

Rohsole aus Mehrwasserentsalzungsanlagen, wie auch Meerwasser selbst, enthält erheblich mehr Magnesiumionen als Calciumionen. Das im Verfahrensschritt 1a) eingesetzte Zeolith A kann sowohl Magnesium als auch Calcium aufnehmen und gibt diese Ionen bei einem deutlichen Überschuss an Natrium wieder ab. Die Konzentration an Natriumionen der im Schritt f) verwendeten aufkonzentrierten Sole aus Schritt e) reicht jedoch nicht aus, um sowohl die lose im Zeolith eingelagerten Magnesiumionen als auch die lose eingelagerten Calciumionen zu desorbieren. Im Verfahrensschritt 1a) wird daher das Zeolith A in einen thermisch modifizierten Zeolith (TMZ) umgewandelt, bei dem alle funktionalen Bereiche der Zeolithstruktur, die Magnesiumionen aufnehmen können, durch Einlagerung von Magnesiumionen mit einer großen Hydrathülle blockiert werden. Entscheidend für die Blockade ist dabei, dass die Temperatur der Magnesiumionen enthaltenden Lösung zwischen 75°C und 100°C liegt und das Säuleninnere anschließend im Schritt b) anschließend auf einen Wert von unter 45°C abgekühlt wird.

Im Schritt c) wird die nach den Schritten a) und b) vorliegende Calciumform des TMZ in die Natriumform des TMZ umgewandelt. Anschließend wird im Schritt d) Calcium aus der aufzuarbeitenden Rohsole in der Säule herausgetrennt und im Gegenzug werden Natriumionen in das Eluat abgegeben. Das Eluat wird anschließend in eine höher konzentrierte Sole jedoch mit einer Calciumionenkonzentration von weniger als 1000 mg/l und in Wasser aufgetrennt. Hierbei findet eine Aufkonzentrierung der höher konzentrierten Sole gegenüber dem ursprünglich im Schritt d) erhaltenen Eluat um den Faktor n statt. Die Gesamtionenkonzentration des Eluats beträgt dabei bevorzugt 130 g/l bis 300 g/l.

Nach Abschluss des Schrittes d) des Verfahrens gemäß des Anspruchs 1 liegt das TMZ weitgehend in der Calciumform vor, das heißt, das TMZ ist kaum noch mit Natriumionen und statt dessen insbesondere mit Calciumform besetzt. Im Schritt f) wird das TMZ dann in die Natrium-Form umgewandelt. Bezogen auf die TMZ-Füllung der Säule kann danach erneut der Schritt d) durchgeführt werden. Das im Verfahrensschritt f) aus der Säule austretende konzentrierte Eluat wird anschließend in Feststoffe und Wasser aufgetrennt.

Gemäß Verfahrensschritt h) des Anspruchs 1 werden die Verfahrensschritte d) bis g) solange wiederholt, bis die Kapazität des TMZ erschöpft ist. Dies äußert sich darin, dass das Eluat im Schritt d) unmittelbar nach einer Überführung des TMZ in die Natriumform durch den Schritt f) bereits im ersten durchgeleiteten Bettvolumen, das heißt dem Volumen, das die Füllung aus TMZ in der Säule einnimmt, eine Calciumionenkonzentration aufweist, die bei ansonsten gleichen Bedingungen um 20% höher ist, als die Calciumionenkonzentration im ersten durchgeleiteten Bettvolumen im Schritt d) unmittelbar nach Durchführung der Schritte a) bis c). Im Schritt d) wird somit die Natriumform des TMZ in die Calciumform umgewandelt und dabei Calciumionen im TMZ aufgenommen und Natriumionen in das Eluat abgegeben. Im Schritt f) wird die Calciumform des TMZ wieder in die Natriumform zurückgeführt, indem Natriumionen aus der aufkonzentrierten Sole aus Schritt e) in das TMZ aufgenommen und gleichzeitig Calciumionen in das Eluat abgegeben werden. Dieser sich wiederholende zyklische Arbeitsprozess kann nach eigenen Messungen etwa 200 mal wiederholt werden, bevor die Kapazität des TMZ erschöpft ist. Mit zunehmender Anzahl der vorgenannten zyklischen Arbeitsprozesse wird die Fähigkeit des TMZ zur Calciumaufnahme im Schritt d) zunehmend geringer. Sobald die im ersten durchgeleiteten Bettvolumen gemessene Calciumionenkonzentration im Schritt d), also in dem Eluat, das unmittelbar nach einer Rückumwandlung des TMZ in die Natriumform durch den Schritt f) im Schritt d) gewonnen wird um 20% höher ist, als die Calciumionenkonzentration im ersten durchgeleiteten Bettvolumen im Schritt d) unmittelbar nach Durchführung der Schritte a) bis c), also unmittelbar nach einer frischen Herstellung des TMZ durch die Verfahrensschritte a) bis c).

Im Schritt e) des Verfahrens nach Anspruchs 1 findet eine Aufkonzentrierung des Eluates statt unter Gewinnung von frischem Wasser, ohne dass Calciumionen durch Entstehung unerwünschte Ablagerungen die Aufkonzentrierung behindern.

Durch das erfindungsgemäße Verfahren ist es möglich, dass die aufzuarbeitende Rohsole bereits im Verfahrensschritt e) eine erhebliche Aufkonzentrierung unter Gewinnung von Frischwasser erfährt und das im Verfahrensschritt f) hergestellte konzentrierte Eluat bereits sehr hoch konzentriert ist, bevor es im Verfahrensschritt g) weiter aufgearbeitet und in Feststoffe sowie Wasser aufgetrennt wird. Die Aufbereitung des konzentrierten Eluats im Verfahrensschritt g) ist daher deutlich kostengünstiger und durch weniger erforderlichen Energieeinsatz als im Falle einer direkten Auftrennung der Rohsole in Feststoffe und Wasser möglich. Das konzentrierte Eluat hat dabei bevorzugt eine Gesamtionenkonzentration zwischen 130 g/l und 300 g/l.

Im Schritt a) und im Schritt d) ist die Fließrichtung der Rohsole bezogen auf die vertikale Säule von oben nach unten durch die Bettfüllung aus Zeolith A bzw. aus TMZ. Am Schritt c) wie auch im Schritt f) ist die Fließrichtung hingegen von unten nach oben bezogen auf die vertikal ausgerichtete Säule durch das Bett aus TMZ. Hierdurch wird eine unerwünschte Durchmischung Calciumreicher und Calciumarmer Lösungen verhindert. Im Schritt a) wie auch im Schritt d) wandert die Grenze zwischen der Calciumform des TMZ und der Natriumform des TMZ dabei von oben nach unten, während die Grenze in den Verfahrensschritten c) und f) von unten nach oben wandert.

In einer besonders bevorzugten Ausgestaltung der Erfindung wird der erschöpfte TMZ durch Wiederholung der Schritte a) bis c) gemäß Anspruch 1 erneut aufgearbeitet. Eine Erschöpfung des TMZ äußerst sich dabei in der bereits zuvor aufgeführten Änderung der Calciumionenkonzentration des im Verfahrensschritt d) gewonnenen Eluats. Untersuchungen haben ergeben, dass erschöpfter TMZ etwa 10 mal regeneriert werden kann. Unter Berücksichtigung der Regeneration des erschöpften TMZ kann der Verfahrensschritt d) damit mit derselben Sorbensfüllung etwa 2000 mal wiederholt werden (200 mal bis zur Erschöpfung des TMZ, 10-malige Regeneration des erschöpften TMZ). Der Verfahrensschritt d) wie auch der Verfahrensschritt f) dauern üblicherweise jeweils etwa vier Stunden. Damit beträgt die Gesamtnutzungsdauer einer einzigen Sorbensfüllung ungefähr zwei Jahre.

Erst wenn erschöpfter TMZ nicht mehr regeneriert werden kann, wird das Sorbensmaterial gegen frischen Zeolith A ausgetauscht und das Verfahren gemäß Anspruch 1 wird erneut angewandt. Das TMZ-Material in der Säule gilt als nicht mehr regenerierbar und wird ausgetauscht, wenn das Eluat im Schritt d) unmittelbar nach Durchführung des Verfahrens gemäß Anspruch 2 bereits im ersten durchgeleiteten Bettvolumen eine Calciumionenkonzentration aufweist, die bei ansonsten gleichen Bedingungen um 20% höher ist, als Calciumionenkonzentration im ersten durchgeleiteten Bettvolumen im Verfahrensschritt d) unmittelbar nach erstmaliger Umwandlung des Zeolith A in TMZ durch Durchführung der Verfahrensschritte a) bis c). Durch die Regeneration des erschöpften TMZ können erhebliche Kosten für die Neubefüllung der Säule mit Zeolith A eingespart werden.

In einer besonderes bevorzugten Ausgestaltung der Erfindung wird das erfindungsgemäße Verfahren durch Einsatz einer weiteren Säule mit einer zur ersten Säule gleichen Bettfüllung kontinuierlich betrieben. Hierzu werden die Verfahrensschritte a) bis h) gemäß Anspruch 1 auch bei der weiteren Säule durchgeführt. Die Schritte auf den beiden Säulen erfolgen jedoch dergestalt zeitlich versetzt zueinander, dass die Schritte d) und f) gemäß Anspruch 1 stets gleichzeitig und im Wechsel auf den beiden Säulen durchgeführt werden. Beispielsweise wird bei jedem ungeraden Durchgang auf der ersten Säule Schritt f) und gleichzeitig auf der weiteren Säule Schritt d) und bei jedem geraden Durchgang auf der ersten Säule Schritt d) und gleichzeitig auf der weiteren Säule Schritt f) durchgeführt. Hierdurch ist ein kontinuierlicher Betrieb des Verfahrens möglich. Durch den kontinuierlichen Betrieb wiederum entfallen Wartezeiten und die Gesamtmenge der pro Zeit aufgearbeiteten Rohsole kann verdoppelt werden, ohne dass sämtliche Bestandteile einer Vorrichtung zur Durchführung des erfindungsgemäßen Verfahrens ebenfalls doppelt vorliegen müssen.

Mit Vorteil ist die Temperatur der Rohsole im Verfahrensschritt d) des Anspruchs 1 stets höher als die Temperatur der höher konzentrierten Sole im Verfahrensschritt f) während des Durchleitens durch den TMZ der gleichen Säule. Bei höheren Temperaturen verbessert sich die Fähigkeit des TMZ zur Aufnahme von Calciumionen anstelle von Natriumionen. Bei niedrigeren Temperaturen hingegen verändert sich die Aufnahmekapazität zugunsten der Natriumionen. Da im Schritt d) Calciumionen aufgenommen werden sollen und im Schritt f) hingegen Natriumionen, kann durch die vorgenannte vorteilhafte Temperaturwahl die Aufnahme von Calcium im Schritt d) und die Abgabe von Calcium im Schritt f) verbessert werden.

In einer besonders bevorzugten Ausgestaltung der Erfindung wird das Eluat im Schritt e) um den Faktor n aufkonzentriert und die Fließgeschwindigkeit im Schritt d) ist um den Faktor n höher als die Fließgeschwindigkeit im Schritt f). Hierdurch wird erreicht, dass die Verfahrensschritte d) und f) unter Berücksichtigung der Aufkonzentrierung und der sich daraus ergebenden Volumenänderungen stets gleichlang dauern. Dies erleichtert einen kontinuierlichen Betrieb des Verfahrens. Dieser Effekt wirkt sich besonders stark dann aus, wenn das Verfahren durch Einsatz von zwei Säulen kontinuierlich betrieben wird, wie bereits beschrieben wurde.

Mit Vorteil wird die Magnesiumionen enthaltende Lösung im Schritt a) des Anspruchs 1 solang durch das Bett aus Zeolith A oder durch das TMZ mit erschöpfter Kapazität geleitet, bis die chemische Zusammensetzung des Eluats identisch ist mit der chemischen Zusammensetzung der Magnesiumionen enthaltenden Lösung. Hierdurch ist sichergestellt, dass sämtliche für Magnesiumionen empfängliche Positionen des Zeolith A mit Magnesiumionen besetzt sind und das Zeolith A somit vollständig in TMZ umgewandelt wurde.

In einer besonders bevorzugten Ausgestaltung der Erfindung wird die Magnesiumionen enthaltende Lösung im Schritt a) von Rohsole aus Mehrwasserentsalzungsanlagen mit einem Gesamtsalzgehalt größer 60 g/l gebildet. Das aus der Säule im Schritt a) austretende calciumarme Eluat wird dann zur weiteren Aufbereitung als konzentrierte teilweise dekalzifizierter Sole direkt Schritt e) unterworfen, sofern die Calciumionenkonzentration kleiner als $\dfrac{1000}{n}$ mg/l ist. Das danach austretende calciumreiche Eluat mit einer Calciumionenkonzentration größer als $\dfrac{1000}{n}$ mg/l wird hingegen der Menge der aufzuarbeitenden Rohsole aus der Entsalzungsanlage erneut zugeführt. Im Ergebnis wird somit das Eluat im Schritt a) in einen ersten Teil und einen zweiten Teil getrennt, wobei der erste Teil bereits calciumionenarm ist und daher weiter aufgearbeitet werden kann, wohingegen der zweite Teil des Eluats calciumreich ist und analog der Rohsole noch aufgearbeitet werden muss. Hierdurch muss das bereits calciumarme Eluat nicht unnötigerweise den Verfahrensschritt d) durchlaufen. Kosten und Zeit können hierdurch eingespart werden.

Mit Vorteil wird die natriumhaltige Lösung im Schritt c) von der teilweise dekalzifizierten und aufkonzentrierten Sole aus Schritt e) gebildet. Hierdurch wird die Herstellung einer separaten natriumhaltigen Lösung vermieden. Die dekalzifizierte und aufkonzentrierte Sole aus Schritt e) enthält dabei eine Natriumionenkonzentration von mehr als 50 g/l. Im Falle der Aufarbeitung von Rohsole aus Mehrwasserentsalzungsanlagen enthält die dekalzifizierte aufkonzentrierte Sole aus Schritt e) üblicherweise etwa 63 g/l Natriumionen.

Mit Vorteil erfolgt die Trennung des Eluats im Schritt e) in Wasser und aufkonzentrierte Sole mittels thermischer Destillation oder Membrandestillation, wobei eine Aufkonzentrierung auf einen Gesamtsalzgehalt der aufkonzentrierten Sole von 130 g/l bis 300 g/l erreicht wird. Da das Eluat aus Schritt d) calciumarm ist, kann das Eluat deutlich aufkonzentriert werden, ohne dass die Entstehung von Gips und Kalkablagerungen eine weitere Aufkonzentrierung in Form der sogenannten "Gipsbarriere" stören.

Die erfindungsgemäße Aufgabe wird zudem durch eine Vorrichtung zur Durchführung des Verfahrens gemäß einem der Ansprüche 1 bis 9 mit den Merkmalen des Anspruchs 10 gelöst. Die Vorrichtung umfasst eine Meerwasserentsalzungsanlage zur Auftrennung von Meerwasser in Trinkwasser mit einem Gesamtionengehalt unter 3 g/l, bevorzugt unter 500 mg/l, und in eine Rohsole mit einem Gesamtsalzgehalt von mehr als 60 g/l. Die Vorrichtung umfasst ferner eine der Meerwasserentsalzungsanlage nachgeschaltete Rohsolenaufbereitungsanlage. Die Rohsolenaufbereitungsanlage wiederum weist eine Sorptionseinheit zur teilweisen Entfernung von Calciumionen aus der Rohsole gemäß Schritt d) des Anspruchs 1 auf, die zumindest eine erste und eine weitere mit thermisch modifiziertem Zeolith (TMZ) befüllte vertikal angeordnete Säule umfasst. Der TMZ ist dabei herstellbar, indem eine Lösung mit einem Magnesiumionengehalt größer 1 g/l mit einer Temperatur zwischen 75°C und 100°C durch die vertikalen Säulen enthaltend eine Füllung aus Zeolith A geleitet wird. Der Zeolith A wird dabei in TMZ umgewandelt. Zur Stabilisierung des TMZ wird die Säulenfüllung anschließend mit Vorteil auf eine Temperatur von unter 45°C abgekühlt. Der Verfahrensschritt d) kann generell auch in einer Sorptionseinheit mit nur einer vertikalen Säule durchgeführt werden. Allerdings ist dann ein kontinuierlich ablaufender Betrieb erschwert.

Die Rohsolenaufbereitungsanlage weist ferner gemäß i) des Vorrichtungsanspruchs 10 eine Entsalzungseinheit zur Auftrennung der teilweise dekalzifizierten Sole aus der Sorptionseinheit in Wasser mit einem Gesamtionengehalt kleiner als 500 mg/l und in eine aufkonzentrierte Sole gemäß Schritt e) des Anspruchs 1 auf. Bevorzugt wird die Entsalzungseinheit dabei von einer Einheit zur thermischen Destillation oder zur Membrandestillation gebildet.

Die Rohsolenaufbereitungsanlage umfasst zudem eine Feststoffeinheit zur Auftrennung der hochkonzentrierten, calciumreichen Sole in Feststoffe und in Wasser, bevorzugt mit einem Gesamtionengehalt kleiner als 500 mg/l, gemäß Schritt g) des Anspruchs 1. Besonders bevorzugt wird die Feststoffeinheit dabei von einer Einheit zur fraktionierten Kristallisation oder fraktionierten Vakuumkristallisation gebildet. Durch die Feststoffeinheit kann das hochkonzentrierte Eluat aus Schritt f) des Anspruchs 1 vollständig in Wasser und kommerziell verwertbare Salze aufgetrennt werden.

Die Rohsolenaufbereitungsanlage umfasst zudem zumindest drei Wärmetauscher, wobei ein erster und ein zweiter Wärmetauscher hintereinander und vor dem Einlass in die Sorptionseinheit wahlweise von oben auf die erste oder von oben auf die weitere Säule zur optionalen Erwärmung der Rohsole geschaltet sind. Der erste Wärmetauscher wird dabei von einem Rekuperator gebildet, der mit der teilweise dekalzifizierten aufkonzentrierten Sole aus der Entsalzungseinheit beheizbar ist. Der zweite Wärmetauscher ist mit erhitztem oder kaltem Wasser temperierbar. Der dritte Wärmetauscher ist hinter dem Rekuperator und vor dem Einlass in die Sorptionseinheit jedoch wahlweise von unten in die erste oder von unten in die weitere Säule angeordnet. Er ist zudem zur Abkühlung der den Rekuperator verlassenden noch warmen teilweise dekalzifizierten aufkonzentrierten Sole aus der Entsalzungseinheit vor dem Eintritt in die Sorptionseinheit ausgebildet. In einer vorteilhaften Ausgestaltung der Erfindung wird der dritte Wärmetauscher von Meerwasser oder aber von Rohsole gekühlt. Der erste und der dritte Wärmetauscher dienen der Steuerung der Temperaturbedingungen beim Durchfluss von Flüssigkeiten durch die Sorptionseinheit. Der Rekuperator dient der Rückgewinnung von in die Erwärmung der im Verfahren genutzten Flüssigkeiten gesteckten Energie. Hierdurch können die Betriebskosten gesenkt werden.

In einer bevorzugten Ausgestaltung der Erfindung ist zwischen Meerwasserentsalzungsanlage und Rohsolenaufbereitungsanlage eine Rohsolenvorbehandlungsgruppe angeordnet. Die Rohsolenvorbehandlungsgruppe weist dabei zumindest eine Säule mit einem Feststoffe und Eisenionen entfernenden Granulat auf. Das Granulat wird dabei besonders bevorzugt von einem natürlichen Zeolith gebildet. Durch die vorherige Entfernung der Feststoffe und Eisenionen aus der Rohsole vor deren Eintritt in die Sorptionseinheit wird die Langlebigkeit der Sorptionseinheit verbessert.

Weitere Einzelheiten und Vorteile der Erfindung sind dem nachfolgend beschriebenen schematisch skizzierten Ausführungsbeispiel zu entnehmen; es zeigen:

Fig. 1 ein Ablaufdiagramm eines erfindungsgemäßen Verfahrens auf einer erfindungsgemäßen Vorrichtung,

Fig. 2 ein Ablauf- und Schaltdiagramm der Sorptionseinheit und der Wärmetauscher aus Fig. 1,

Fig. 3 ein schematisches Ablaufdiagramm der Herstellung, Erschöpfung und Regeneration von TMZ.

Nachfolgend werden gleichwirkende Elemente des Verfahrens oder der Vorrichtung mit einer einheitlichen Bezugsziffer versehen, sofern dies sinnvoll ist. Die nachfolgend erläuterten Merkmale des Ausführungsbeispiels können selbstverständlich auch einzeln oder in anderen Kombinationen Gegenstand der Erfindung sein.

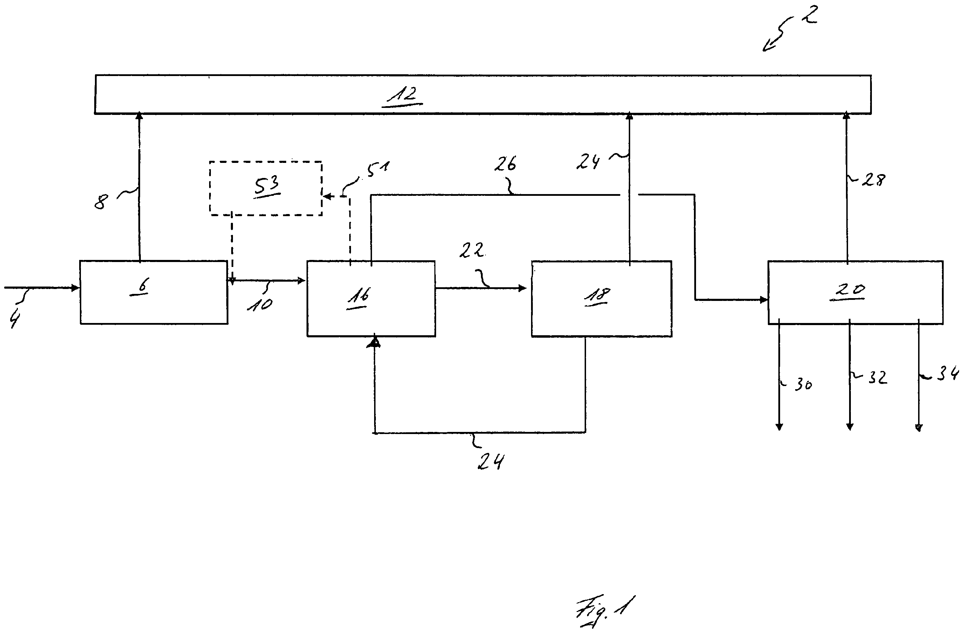

Fig. 1 zeigt ein Ablaufdiagramm einer erfindungsgemäßen Vorrichtung 2 auf der das erfindungsgemäße Verfahren ebenfalls veranschaulicht ist. Meerwasser mit einem Gesamtsalzgehalt von beispielsweise 35 g/l, dargestellt durch Pfeil 4, gelangt in eine Meerwasserentsalzungsanlage 6. Die Meerwasserentsalzungsanlage kann beispielsweise aus einer thermischen Destillationsanlage (MSF, MED, Dampfkompression) oder einer Reverseosmoseanlage (SWRO) gebildet werden. Das Meerwasser wird in der Meerwasserentsalzungsanlage 6 in Trinkwasser, dargestellt durch Pfeil 8, mit einem Gesamtsalzgehalt von weniger als 3000 mg/l, insbesondere weniger als 500 mg/l, und in Rohsole beispielsweise mit einem Salzgehalt von 65 g/l, dargestellt durch Pfeil 10, aufgetrennt werden. Das Trinkwasser gelangt in einen Speicher 12.

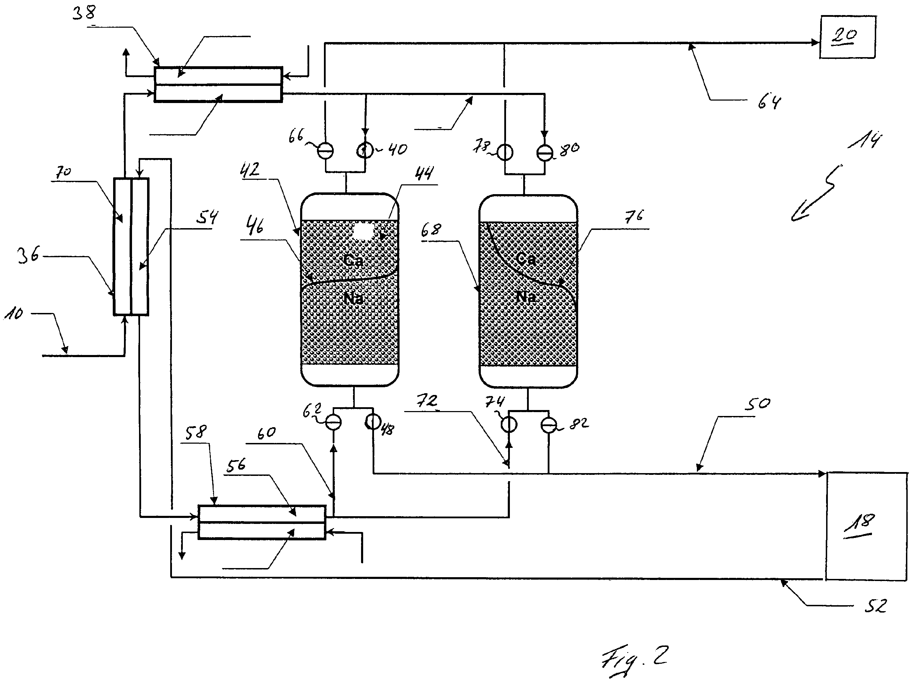

Die Rohsole gelangt in einen ersten Abschnitt einer Rohsolenaufbereitungsanlage 14 umfassend eine Sorptionseinheit 16, eine Entsalzungseinheit 18 und eine Feststoffeinheit 20. Details der Rohsolenaufbereitungsanlage 14 sind in Fig. 2 im Detail beschrieben. Fig. 1 dient lediglich dazu, einen groben Überblick zu erhalten.

Die Rohsole gelangt gemäß Fig. 1 zunächst in die Sorptionseinheit 16. In der Sorptionseinheit 16 werden die in der Rohsole enthaltenen Calciumionen zurückbehalten und gegen Natriumionen ausgetauscht. Die dergestalt zumindest teilweise dekalzifizierte Sole, dargestellt durch Pfeil 22, wird zur Entsalzungsgruppe 18 geleitet. Dort wird die teilweise dekalzifizierte Sole aufgetrennt in Trinkwasser und eine höher konzentrierte Sole mit einem Gesamtsalzgehalt zwischen 130 g/l und 300 g/l. Das Trinkwasser wird von der Entsalzungseinheit 18 in den Speicher 12 geleitet, dargestellt durch Pfeil 24. Die höher konzentrierte Sole wiederum wird von der Entsalzungseinheit 18 zur Sorptionseinheit 16 geleitet, dargestellt durch Pfeil 24. Mit Hilfe der höher konzentrierten Sole, die wenig Calciumionen und viel Natriumionen enthält, wird das in der Sorptionseinheit 16 enthaltene TMZ von der Calciumform in die Natriumform umgewandelt und die dabei gewonnene calciumreiche konzentrierte Sole mit einem Gesamtionengehalt von 130 g/l bis 300 g/l wird der Feststoffeinheit 20 zugeführt, dargestellt durch Pfeil 26. Die Feststoffeinheit 20 wird bevorzugt von einer Einheit zur fraktionierten Kristallisation oder fraktionierten Vakuumkristallisation gebildet. Sie trennt die calciumreiche konzentrierte Sole in Trinkwasser, das dann von dort in den Speicher 12 gelangt, dargestellt durch Pfeil 28, und in auskristallisierte, gewonnene Feststoffe, wie Calciumsulfat, Natriumchlorid und diverse Kaliumsowie Magnesiumsalze, dargestellt durch die Pfeile 30, 32 und 34.

Fig. 2 zeigt Details der Rohsolenaufbereitungsanlage 14. Zu Beginn wird Zeolith A in TMZ umgewandelt. Hierzu wird Rohsole mit einem Salzgehalt von beispielsweise 65 g/l, dargestellt durch Pfeil 10, wird in einem Rekuperator 36 und anschließend in einem ersten Wärmetauscher 38 auf eine Temperatur zwischen 75°C und 100°C erhitzt und anschließend durch das Ventil 40 auf die erste vertikale Säule 42 mit Fließrichtung von oben nach unten geleitet. Die erste vertikale Säule 42 ist mit einem Säulenbett aus Zeolith A gefüllt. Infolge des Durchleitens der stark magnesiumionenhaltigen Rohsole bei einer Temperatur von 75°C bis 100°C durch das Bett aus Zeolith A wird der Zeolith A in thermisch modifizierten Zeolith (TMZ) 44 umgewandelt. Gleichzeitig verschiebt sich die Grenze 46 zwischen der Calciumform des TMZ und der Natriumform des TMZ in Fließrichtung von oben nach unten. Der erste, calciumarme Teil des Eluats aus der Säule 42 wird über das Ventil 48 der Entsalzungseinheit 18 zugeführt. Dort wird das Eluat in Frischwasser einerseits und eine höher konzentrierte calciumarme Sole mit einem Gesamtsalzgehalt zwischen 130 g/l und 300 g/l aufgetrennt. Das anschließend die erste Säule 42 verlassende, calciumreiche Eluat wird zurück zum Vorrat der aufzuarbeitenden Rohsole geleitet, dargestellt durch Leitung 51 und Vorratsgefäß 53.

Die höher konzentrierte Sole wird anschließend über die Leitung 52 zur Abkühlung zunächst durch den Wärme abgebenden Teil 54 des Rekuperators 36 und anschließend durch den Wärme abgebenden Teil 56 des Wärmetauschers 58 geleitet und dadurch auf eine Temperatur von unter 45°C abgekühlt. Von dort wird die höher konzentrierte Sole über die Leitung 60 und durch das Ventil 62 von unten in die erste Säule 42 geleitet. Dabei wird die Calciumform des TMZ in die Natriumform umgewandelt, so dass sich die Grenze 46 zwischen den Formen in Fließrichtung von unten nach oben verlagert. Das aus der ersten Säule 42 austretende Eluat der calciumreichen höher konzentrierten Sole wird über die Leitung 64 durch das Ventil 66 zur Feststoffeinheit 20 geleitet, wo es in Feststoffe einerseits und Trinkwasser andererseits aufgetrennt wird. Mit der weiteren vertikal angeordneten Säule 68, die analog zur ersten Säule 42 befüllt ist, wird analog verfahren. Nach Überführung des Zeolith A in den TMZ in der ersten Säule 42 wird auch der Zeolith A in der weiteren Säule 68 über Schließung der der ersten Säule 42 zugeordneten Ventile 40 und 48 und Öffnung der der weiteren Säule 68 zugeordneten Ventile 80 und 82 in TMZ in analoger Weise umgewandelt.

Anschließend beginnt der kontinuierliche Betrieb der Rohsolenaufbereitungsanlage 14 entsprechend der sich wiederholenden Schritte d) bis h) des Anspruchs 1. Rohsole wird der Rohsolenaufbereitungsanlage 14 durch die Leitung 10 zugeführt und durch den abkühlenden Teil 70 des Rekuperators 36 und den zweiten Wärmetauscher 38 geleitet und dabei auf eine Temperatur zwischen 30°C und 45°C erwärmt. Die Rohsole wird anschließend durch das Ventil 40 auf die erste Säule 42 geleitet, wobei sich die Grenze 46 zwischen der Calciumform und der Natriumform des TMZ 44 in Fließrichtung von oben nach unten verschiebt. Das am unteren Ende der ersten vertikalen Säule 42 auslaufende Eluat einer teilweise dekalzifizierten Sole wird über das Ventil 48 und die Leitung 50 der Entsalzungseinheit 18 zugeführt, wo es in Frischwasser und eine höher konzentrierte Sole aufgetrennt wird. Die höher konzentrierte Sole wird über die Leitung 52 in den Rekuperator 36 und von dort in den dritten Wärmetauscher 58 geleitet, wo es auf eine Temperatur von unter 45°C abgekühlt wird. Eine Abkühlung ist insbesondere dann notwendig, wenn die höher konzentrierte Sole beispielsweise in einem Destillationsverfahren in der Entsalzungseinheit zuvor erhitzt wurde.

Nach Verlassen des dritten Wärmetauschers 58 durch die Leitung 72 und das Ventil 74 wird die höher konzentrierte natriumreiche und calciumarme Sole in Fließrichtung von unten nach oben durch die Bettfüllung aus TMZ der weiteren Säule 68 geleitet. Dabei wird die Calciumform des TMZ in der weiteren Säule 68 in die Natriumform umgewandelt und die Grenze 76 zwischen der Calciumform und der Natriumform des TMZ wird in Fließrichtung von unten nach oben verschoben. Das aus der weiteren Säule austretende calciumreiche Eluat der konzentrierten Sole wird über die Leitung 64 und das Ventil 78 der Feststoffeinheit 20 zur Trennung in Feststoffe und Trinkwasser zugeführt.

Die erste Säule 42 und die weitere Säule 68 werden anschließend kontinuierlich parallel betrieben. Während, wie in Fig. 2 dargestellt, zunächst Rohsole im Schritt d) durch die erste Säule 42 fließt, wird parallel hierzu durch die geöffneten Ventile 74 und 78 zeitgleich höher konzentrierte Sole aus der Entsalzungseinheit zur Rückumwandlung der Calciumform des TMZ in die Natriumform geleitet. Sobald Calciumionen das TMZ-Bett 44 der ersten Säule durchbrechen, werden die Ventile 40 und 48 sowie 74 und 78 geschlossen und die Ventile 80 und 82 sowie 62 und 66 geöffnet. Die aufzuarbeitende Rohsole durchströmt dann die weitere Säule 68 und wird dabei dekalzifiziert, während die höher konzentrierte Sole aus der Entsalzungseinheit 18 über das Ventil 62 in Fließrichtung von unten nach oben in die erste Säule 42 eintritt und dort die Natriumform des TMZ in dessen Calciumform umwandelt. Die Säulen 42, 68 werden dergestalt permanent im Wechsel und parallel betrieben.

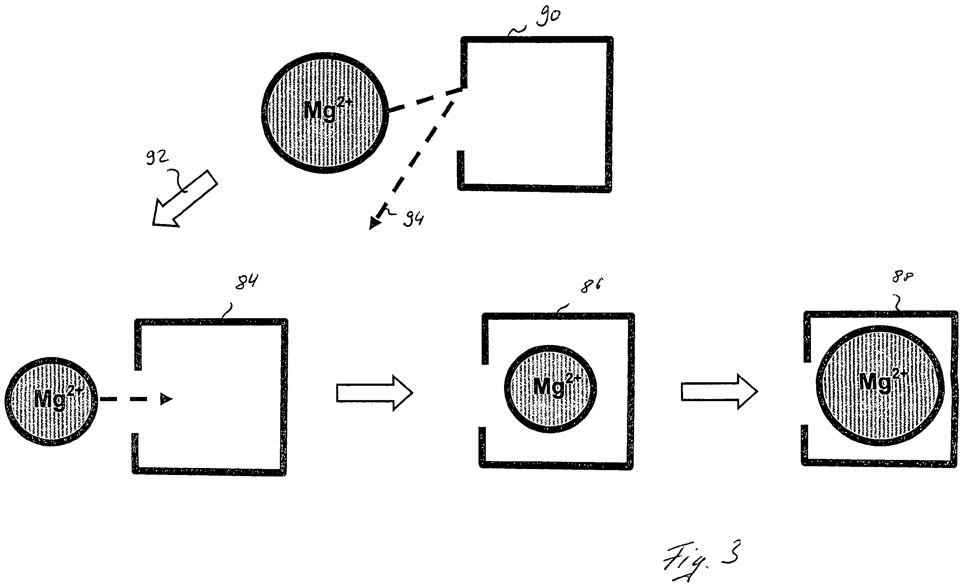

Fig. 3 illustriert die Umwandlung des Zeolith A 84 in TMZ 86 und dessen Stabilisierung 88. Magnesiumionen, gelöst in Wasser, weisen bei einer Temperatur zwischen 75°C und 100°C eine lediglich kleine Hydrathülle auf, so dass Magnesiumionen ohne Schwierigkeiten in für Magnesiumionen zugängliche Stellen des Zeolith A eindringen können, so dass TMZ 86 entsteht. Anschließend wird das TMZ und die im TMZ verbliebene Flüssigkeit auf eine Temperatur von unter 45°C abgekühlt. Hierdurch wird die Hydrathülle der Magnesiumionen deutlich größer, so dass das Magnesiumion das TMZ nicht mehr verlassen kann. Es entsteht eine stabilisierte Form 88 des TMZ. Die Hydrathülle der Magnesiumionen ist in Fig. 3 durch unterschiedlich große Kreise um das Magnesiumion angedeutet. Während der permanenten Durchleitung von Rohsole einerseits und höher konzentrierten, dekalzifizieten Sole andererseits durch den TMZ, wird dessen Kapazität erschöpft indem Magnesiumionen den TMZ trotz Fixierung durch die größere Hydrathülle verlassen. Ein zuvor von einem Magnesiumion mit einer Hydrathülle besetzter und soeben freigewordener Hohlraum des erschöpften TMZ zeigt Bezugsziffer 90. Der erschöpfte TMZ 90 wird anschließend erneut regeneriert, dargestellt durch die Pfeile 92 und 94.

**Patentansprüche**

1. Verfahren zur Aufbereitung von Rohsolen aus Entsalzungsanlagen (6) mit einem Gesamtsalzgehalt größer 60 g/l umfassend folgende Schritte in dieser Reihenfolge:

a) eine Magnesiumionen enthaltende Lösung mit einem Magnesiumionengehalt größer 1 g/l, insbesondere Rohsole aus Meerwasserentsalzungsanlagen (6) mit einem Gesamtsalzgehalt größer 60 g/l, wird mit einer Temperatur zwischen 75°C und 100°C durch eine erste vertikale Säule (42) enthaltend eine Bettfüllung aus Zeolith A (84) mit einer Fließrichtung von oben nach unten geleitet, das dabei zu thermisch modifiziertem Zeolith (TMZ) (44) umgewandelt wird,

b) das Innere der mit dem Bett aus TMZ (44) befüllten Säule (42) wird auf eine Temperatur von kleiner als 45°C abgekühlt,

c) eine Natriumionen enthaltende Lösung mit einer Natriumionenkonzentration von mehr als 50 g/l und mit einer Temperatur von unter 45°C wird mit einer Fließrichtung von unten nach oben durch das Bett aus TMZ (44) in der ersten Säule (42) geleitet,

d) die aufzubereitende Rohsole wird mit einer Temperatur von 30°C bis 45°C in Fließrichtung von oben nach unten durch die mit einem Bett aus TMZ befüllte erste Säule (42) geleitet bis die Calciumionenkonzentration des die erste Säule (42) verlassenden Eluats einen Wert von 1000/n mg/l übersteigt und damit einen Durchbruch der Calciumionen durch das Bett aus TMZ (44) anzeigt, wobei n der Faktor der Aufkonzentrierung des Eluates im nächsten Schritt e) ist,

e) das Eluat aus Schritt d) wird in einer Entsalzungseinrichtung (18) in Wasser mit einem Gesamtsalzgehalt kleiner als 500 mg/l und eine höher konzentrierte Sole mit einer Calciumionenkonzentration von weniger als 1000 mg/l getrennt, wobei eine Aufkonzentrierung der höherkonzentrierten Sole gegenüber dem Eluat um den Faktor n erfolgt,

f) die aufkonzentrierte Sole aus Schritt e) wird mit einer Temperatur von unter 45°C mit einer Fließrichtung von unten nach oben das Bett aus dem TMZ (44) in der ersten Säule (42) geleitet,

g) das konzentrierte Eluat aus Verfahrensschritt f) wird in einer Feststoffeinheit (20) in Feststoffe und Wasser aufgetrennt,

h) die Verfahrensschritte d) bis g) werden solange wiederholt, bis die Kapazität des TMZ (44) erschöpft ist, was sich darin äußert, dass das Eluat im Schritt d) unmittelbar nach einer Überführung des TMZ (44) in die Natriumform durch den Schritt f) bereits im ersten durchgeleiteten Bettvolumen eine Calciumionenkonzentration aufweist, die bei ansonsten gleichen Bedingungen um 20% höher ist, als die Calciumionenkonzentration im ersten durchgeleiteten Bettvolumen im Schritt d) unmittelbar nach Durchführung der Schritte a) bis c).

2. Verfahren nach Anspruch 1, **dadurch gekennzeichnet, dass** erschöpfter TMZ (44,90) aufgearbeitet wird durch Wiederholung der Schritte a) bis c) gemäß Anspruch 1, wobei sich eine Erschöpfung des TMZ (44,90) darin äußert, dass das Eluat im Schritt d) unmittelbar nach einer Überführung des TMZ in die Natriumform durch den Schritt f) bereits im ersten durchgeleiteten Bettvolumen eine Calciumionenkonzentration aufweist, die bei ansonsten gleichen Bedingungen um 20% höher ist, als die Calciumionenkonzentration im ersten durchgeleiteten Bettvolumen im Schritt d) unmittelbar nach Durchführung der Schritte a) bis c).

3. Verfahren nach einem der vorhergehenden Ansprüche, **dadurch gekennzeichnet, dass** das Verfahren durch Einsatz einer weiteren Säule (68) mit einer zur ersten Säule (42) gleichen Bettfüllung kontinuierlich betrieben wird, indem die Schritte a) bis h) gemäß Anspruch 1 auch bei der weiteren Säule (68) durchgeführt werden, wobei die Schritte auf den Säulen (42,68) jedoch dergestalt zeitlich versetzt zueinander erfolgen, dass die Schritte d) und f) gemäß Anspruch 1 stets gleichzeitig und im Wechsel auf den beiden Säulen (42,68) durchgeführt werden.

4. Verfahren nach einem der vorhergehenden Ansprüche, **dadurch gekennzeichnet, dass** die Temperatur der Rohsole im Schritt d) stets höher ist als die Temperatur der höherkonzentrierten Sole im Schritt f) während des Durchleitens durch den TMZ der gleichen Säule (42,68).

5. Verfahren nach einem der vorhergehenden Ansprüche, **dadurch gekennzeichnet, dass** das Eluat im Schritt e) um den Faktor n aufkonzentriert wird und die Fließgeschwindigkeit im Schritt d) um den Faktor n höher ist als die Fließgeschwindigkeit im Schritt f).

6. Verfahren nach einem der vorhergehenden Ansprüche, **dadurch gekennzeichnet, dass** die Magnesiumionen enthaltende Lösung im Schritt a) solange durch das Bett aus Zeolith A (84) oder durch das TMZ mit erschöpfter Kapazität (90) geleitet wird, bis die chemische Zusammensetzung des Eluats identisch ist mit der chemischen Zusammensetzung der Magnesiumionen enthaltende Lösung.

**7.** Verfahren nach einem der vorhergehenden Ansprüche, **dadurch gekennzeichnet, dass** die Magnesiumionen enthaltende Lösung im Schritt a) von Rohsole aus Meerwasserentsalzungsanlagen (6) mit einem Gesamtsalzgehalt größer 60 g/l gebildet wird und das aus der Säule im Schritt a) austretende calciumarme Eluat zur weiteren Aufbereitung als konzentrierter teilweise dekalzifizierter Sole direkt Schritt e) unterworfen wird, sofern die Calciumionenkonzentration kleiner als 1000/n mg/l ist, und das anschließend austretende calciumionenreiche Eluat mit einer Calciumionenkonzentrion größer als 1000/n mg/l der Menge der aufzuarbeitenden Rohsole aus der Entsalzungsanlage (18) erneut zugeführt wird.

**8.** Verfahren nach einem der vorhergehenden Ansprüche, **dadurch gekennzeichnet, dass** die natriumhaltige Lösung im Schritt c) von der teilweise dekalzifizierten und aufkonzentrierten Sole aus Schritt e) gebildet wird.

**9.** Verfahren gemäß einem der vorhergehenden Ansprüche, **dadurch gekennzeichnet, dass** die Trennung des Eluates im Schritt e) in Wasser und aufkonzentrierte Sole mittels thermischer Destillation oder Membrandestillation und einer Aufkonzentrierung auf einen Gesamtsalzgehalt der aufkonzentrierte Sole von 130 bis 300 g/l erfolgt.

**10.** Vorrichtung (2) zur Durchführung des Verfahrens gemäß einem der Ansprüche 1 bis 9, mit einer Meerwasserentsalzungsanlage (6), zur Auftrennung von Meerwasser in Trinkwasser mit einem Gesamtionengehalt unter 3 g/l und in eine Rohsole mit einem Gesamtsalzgehalt von mehr als 60 g/l, und mit einer der Meerwasserentsalzungsanlage (6) nachgeschalteten Rohsolenaufbereitungsanlage (14), wobei die Rohsolenaufbereitungsanlage (14) umfasst:

i) eine Sorptionseinheit (16) zur teilweisen Entfernung von Calciumionen aus der Rohsole gemäß Schritt d) des Anspruchs 1, die zumindest eine erste (42) und eine weitere (68) mit thermisch modifiziertem Zeolith (TMZ) (86,88) befüllte vertikal angeordnete Säule aufweist, wobei der TMZ (86,88) herstellbar ist, indem eine Lösung mit einem Magnesiumionengehalt größer 1 g/l mit einer Temperatur zwischen 75°C und 100°C durch die vertikalen Säulen enthaltend eine Füllung aus Zeolith A (84) geleitet wird, ii) eine Entsalzungseinheit (18) zur Auftrennung der teilweise dekalzifizierten Sole aus der Sorptionseinheit in Wasser mit einem Gesamtionengehalt kleiner als 500 mg/l und in eine aufkonzentrierte Sole gemäß Schritt e) des Anspruchs 1, iii) eine Feststoffeinheit (20) zur Auftrennung der hochkonzentrierten, calciumionenreichen Sole in Feststoffe und in Wasser mit einem Gesamtionengehalt kleiner als 500 mg/l gemäß Schritt g) des Anspruchs 1, iv) und zumindest drei Wärmetauscher (36, 38, 58), wobei ein erster und ein zweiter Wärmetauscher (36, 38) hintereinander und vor dem Einlass in die Sorptionseinheit (16) wahlweise von oben auf die erste (42) oder von oben auf die weitere Säule (68) zur optionalen Erwärmung der Rohsole geschaltet sind, der erste Wärmetauscher ein Rekuperator (36) ist, der mit der teilweise dekalzifizierten aufkonzentrierten Sole aus der Entsalzungseinheit (16) beheizbar ist, und der zweite Wärmetauscher (38) mit erhitztem oder kaltem Wasser temperierbar ist, und wobei der dritte Wärmetauscher (58) hinter dem Rekuperator (36) und vor dem Einlass in die Sorptionseinheit (16) wahlweise von unten in die erste (42) oder von unten in die weitere Säule (68) angeordnet und zur Abkühlung der den Rekuperator (36) verlassenden noch warmen teilweise dekalzifizierten aufkonzentrierten Sole aus der Entsalzungseinheit (18) vor dem Eintritt in die Sorptionseinheit (16) ausgebildet ist.

**11.** Vorrichtung (2) nach Anspruch 10, **dadurch gekennzeichnet, dass** die Entsalzungseinheit (18) von einer Einheit zur thermischen Destillation oder zur Membrandestillation gebildet wird.

**12.** Vorrichtung (2) nach einem der Ansprüche 10 oder 11, **dadurch gekennzeichnet, dass** die Feststoffeinheit (20) von einer Einheit zur fraktionierten Kristallisation oder zur fraktionierten Vakuumkristallation gebildet wird.

**13.** Vorrichtung (2) nach einem der Ansprüche 10 bis 12, **dadurch gekennzeichnet, dass** zwischen Meerwasserentsalzungsanlage (6) und Rohsolenaufbereitungsanlage (14) eine Rohsolenvorbehandlungsgruppe angeordnet ist, die zumindest eine Säule mit einem Feststoffe und Eisenionen entfernenden Granulat, insbesondere aus einem natürlichen Zeolith, aufweist.

**Claims**

**1.** Method for treating raw brines from desalination plants (6) having a total salt content of more than 60 g/l the method comprising the following steps in the following sequence:

a) conveying a magnesium ion-containing solution having a magnesium ion content of more than 1 g/l, in particular raw brines from seawater desalination plants (6) having a total salt content of more than 60 g/l, through a first vertical column (42) containing a bed filling of zeolite A (84) at a temperature of between 75 °C and 100 °C in a flow direction from top to bottom, the zeolite A being converted to thermally modified zeolite (TMZ) (44) in the process;

b) cooling the interior of the first column (42) filled with the bed of TMZ (44) to a temperature of below 45 °C;

c) conveying a sodium ion-containing solution having a sodium ion concentration of more than 50 g/l and a temperature of below 45 °C through the bed of TMZ (44) in the first column (42) in a flow direction from bottom to top;

d) conveying the raw brine to be treated through the first column (42) filled with the bed of TMZ at a temperature of from 30 °C to 45 °C in a flow direction from top to bottom until the calcium ion concentration of the eluate exiting the first column (42) surpasses a value of 1,000/n mg/l, indicating that calcium ions have broken through the bed of TMZ (44), wherein n is the factor of concentration increase of the eluate in the next step e);

e) separating the eluate of step d) in a desalination device (18) into water that has a total salt content of less than 500 mg/l and into a more highly concentrated brine that has a calcium ion concentration of less than 1,000 mg/l, wherein the concentration of the more highly concentrated brine relative to the eluate of step d) increases by the factor n;

f) conveying the concentrated brine of step e) through the bed of TMZ (44) in the first column (42) at a temperature of below 45 °C in a flow direction from bottom to top;

g) separating the concentrated eluate of method step f) into solids and water in a solids unit (20);

h) repeating steps d) to g) until the capacity of the TMZ (44) is exhausted, exhaustion of the TMZ being identified by the eluate in step d), immediately after conversion of the TMZ (44) into sodium form by step f), already having a calcium ion concentration in the first bed volume conveyed through the first column that, under otherwise identical conditions, is 20 % higher than the calcium ion concentration in the first bed volume conveyed through the first column in step d) immediately after performing steps a) to c).

2. Method according to claim 1, **characterised in that** exhausted TMZ (44, 90) is reprocessed by repeating steps a) to c) according to claim 1, exhaustion of the TMZ (44, 90) being indicated by the eluate in step d), immediately after conversion of the TMZ into sodium form according to step f), already having a calcium ion concentration in the first bed volume conveyed through the first column that, under otherwise identical conditions, is 20 % higher than the calcium ion concentration in the first bed volume conveyed through the first column in step d) immediately after performing steps a) to c).

3. Method according to either of the preceding claims, **characterised in that** the method is operated continuously by using a further column (68) having a bed filling that is the same as that of the first column (42), steps a) to h) according to claim 1 also being performed in the further column (68), the steps, however, occurring in the columns (42, 68) in a manner temporally offset relative to one another such that steps d) and f) according to claim 1 are always performed simultaneously and alternatingly in the two columns (42, 68).

4. Method according to any of the preceding claims, **characterised in that** the temperature of the raw brine in step d) is always higher than the temperature of the more highly concentrated brine in step f) as it is conveyed through the TMZ in the same column (42, 68).

5. Method according to any of the preceding claims, **characterised in that** the concentration of the eluate in step e) is increased by the factor n and the flow speed in step d) is greater by the factor n than the flow speed in step f).

6. Method according to any of the preceding claims, **characterised in that** the magnesium ion-containing solution in step a) is conveyed through the bed of zeolite A (84) or through the TMZ having an exhausted capacity (90) until the chemical composition of the eluate is identical to the chemical composition of the magnesium ion-containing solution.

7. Method according to any of the preceding claims, **characterised in that** the magnesium ion-containing solution in step a) is formed of raw brine from seawater desalination plants (6) having a total salt content of more than 60 g/l, and the calcium-poor eluate exiting the first column in step a) is immediately subjected to step e) for further treatment as a concentrated, partially decalcified brine, as long as the calcium ion concentration is less than 1,000/n mg/l and the calcium ion-rich eluate subsequently exiting the column having a calcium ion concentration of more than 1,000/n mg/l is returned to the quantity of the raw brine from the desalination plant (18) to be reprocessed.

8. Method according to any of the preceding claims, **characterised in that** the sodiumcontaining solution in step c) is formed by the partially decalcified and concentrated brine of step e).

9. Method according to any of the preceding claims, **characterised in that** the separation of the eluate into water and concentred brine in step e) is carried out by thermal distillation or membrane distillation and the total salt content of the concentrated brine is increased from 130 to 300 g/l.

10. Device (2) for performing the method according to any of claims 1 to 9, comprising a seawater desalination plant (6) for separating seawater into drinking water that has a total ion content of less than 3 g/l and into a raw brine that has a total salt content of more than 60 g/l, and comprising a raw brine treatment plant (14) downstream of the seawater desalination plant (6), wherein the raw brine treatment plant (14) comprises:

   i) a sorption unit (16) for partially removing calcium ions from the raw brine according to step d) of claim 1, which sorption unit comprises at least a first (42) and one second (68) column that are arranged vertically and filled with thermally modified zeolite (TMZ) (86, 88), wherein the TMZ (86, 88) can be prepared by means of a solution having a magnesium ion content of more than 1 g/l and a temperature of between 75°C and 100°C being conveyed through the vertical columns containing a filling of zeolite A (84);
   ii) a desalination unit (18) for separating the partially decalcified brine from the sorption unit into water that has a total ion content of less than 500 mg/l and into a concentrated brine according to step e) of claim 1;
   iii) a solids unit (20) for separating the highly concentrated, calcium ion-rich brine into solids and into water that has a total ion content of less than 500 mg/l according to step g) of claim 1; and
   iv) at least three heat exchangers (36, 38, 58), wherein a first and a second heat exchanger (36, 38) are connected in series and upstream of the inlet of the sorption unit (16) from above either the first column (42) or the further column (68) for optionally heating the raw brine, the first heat exchanger being a recuperator (36) that can be heated together with the partially decalcified concentrated brine from the desalination unit (16), and the temperature of the second heat exchanger (38) can be controlled by means of heated or cold water, and wherein the third heat exchanger (58) is arranged downstream of the recuperator (36) and upstream of the inlet of the sorption unit (16) either at the bottom of the first column (42) or at the bottom of the further column (68) and is designed to cool the still warm, partially decalcified concentrated brine from the desalination unit (18) exiting the recuperator (36) before it enters the sorption unit (16).

11. Device (2) according to claim 10, **characterised in that** the desalination unit (18) is formed by a thermal distillation unit or a membrane distillation unit.

12. Device (2) according to either claim 10 or claim 11, **characterised in that** the solids unit (20) is formed by a fractioned crystallisation unit or a fractioned vacuum crystallisation unit.

13. Device (2) according to any of claims 10 to 12, **characterised in that** a raw brine pretreatment group is arranged between the seawater desalination plant (6) and the raw brine treatment plant (14) which pretreatment group comprises at least one column containing a granular material, in particular natural zeolite, that removes solids and iron ions.

**Revendications**

1. Procédé de traitement d'eau saumâtre brute provenant d'installation de désalinisation (6) et ayant avec une teneur totale en sel supérieure à 60 g/l, le procédé comprenant dans l'ordre donné les étapes suivante :

   a) une solution contenant des ions magnésium avec une teneur en ions magnésium supérieure à 1 g/l, notamment de l'eau saumâtre brute provenant d'installation de désalinisation (6) avec une teneur totale en sel supérieure à 60 g/l, est passée dans un sens d'écoulement de haut en bas à une température comprise entre 75°C et 100°C à travers une première colonne verticale (42) contenant un lit de remplissage à base de zéolithe A(84) qui est convertie en zéolite modifiée thermiquement (TMZ) (44),
   b) l'intérieur de la colonne (42), remplie de TMZ (44), est refroidie à une température inférieure à 45°C,
   c) une solution contenant des ions sodium à une concentration en ions sodium supérieure à 50 g/l et ayant une température inférieure à 45°C est passée dans un sens d'écoulement de bas en haut à travers le lit de TMZ (44) de la première colonne (42),
   d) l'eau saumâtre brute à traiter est passée à une température de 30°C à 45°C dans le sens d'écoulement de haut en bas à travers la première colonne (42) remplie d'un lit de TMZ jusqu'à ce que la concentration en ions calcium de l'éluat quittant la première colonne (42) soit supérieure à une valeur de 1000/n mg/l, ce qui indique un passage des ions calcium à travers le lit de TMZ (44), n étant le facteur de concentration de l'éluat dans l'étape suivante e),
   e) l'éluat de l'étape d) est séparé dans un dispositif de désalinisation (18) en eau ayant une teneur totale en sel inférieure à 500 mg/l et en une eau saumâtre plus concentrée ayant une concentration en ions calcium inférieure à 1000 mg/l, une concentration de l'eau saumâtre plus concentrée que l'éluat est effectué avec le facteur n,

f) l'eau saumâtre concentrée de l'étape e) est passée à une température inférieure à 45°C dans un sens d'écoulement de bas en haut à travers le lit de TMZ (44) de la première colonne (42),

g) l'éluat concentré de l'étape f) est séparé en matières solides et en eau dans une unité de matières solides (20),

h) les étapes de procédé d) à g) sont répétées jusqu'à épuisement de la capacité de la TMZ (44), ce qui se traduit par le fait que l'éluat de l'étape d) a, déjà dans le premier volume de lit traversé immédiatement après la transformation de la TMZ (44) en la forme de sodium de l'étape f), une concentration en ions calcium qui est, dans des conditions identiques par ailleurs, supérieure de 20% à la concentration en ions calcium dans le premier volume de lit traversé à l'étape d) immédiatement après la réalisation des étapes a) à c).

2. Procédé selon la revendication 1, **caractérisé en ce que** la TMZ épuisée (44, 90) est traitée par répétition des étapes a) à c) selon la revendication 1, un épuisement de la TMZ (44, 90) se traduisant le fait que l'éluat de l'étape d) a, déjà dans le premier volume de lit traversé directement après une transformation de la TMZ en la forme de sodium de l'étape f), une concentration en ions calcium qui est, dans des conditions identiques par ailleurs, supérieure de 20% à la concentration en ions calcium dans le premier volume de lit traversé à l'étape d) immédiatement après la réalisation des étapes a) à c).

3. Procédé selon l'une des revendications précédentes, **caractérisé en ce que** le procédé est mis en oeuvre en continu à l'aide d'une autre colonne (68) comportant un lit de remplissage identique à celui de la première colonne (42) par réalisation des étapes a) à h) selon la revendication 1 également dans l'autre colonne (68), les étapes étant cependant réalisées sur les colonnes (42, 68) avec un décalage temporelles entre elles de sorte que les étapes d) et f) selon la revendication 1 sont toujours réalisées simultanément et alternativement sur les deux piliers (42, 68) .

4. Procédé selon l'une des revendications précédentes, **caractérisé en ce que** la température de l'eau saumâtre brute de l'étape d) est toujours supérieure à la température de l'eau saumâtre plus concentrée de l'étape f) au cours du passage à travers la TMZ de la même colonne (42, 68).

5. Procédé selon l'une des revendications précédentes, **caractérisé en ce que** l'éluat de l'étape e) est concentré du facteur n et la vitesse d'écoulement à l'étape d) est supérieure d'un facteur n à la vitesse d'écoulement de l'étape f).

6. Procédé selon l'une des revendications précédentes, **caractérisé en ce que** la solution contenant des ions magnésium de l'étape a) est passée à travers le lit de zéolite A (84) ou à travers la TMZ de capacité appauvrie (90) jusqu'à ce que la composition chimique de l'éluat soit identique à la composition chimique de la solution contenant des ions magnésium.

7. Procédé selon l'une des revendications précédentes, **caractérisé en ce que** la solution contenant des ions magnésium de l'étape a) est formée de l'eau saumâtre brute provenant d'installation de désalinisation d'eau de mer (6) avec une teneur totale en sel supérieure à 60 g/l et l'éluat pauvre en calcium, sortant de la colonne de l'étape a), est soumis directement à l'étape e) en tant qu'eau saumâtre partiellement décalcifiée concentrée en vue d'un autre traitement, à condition que la concentration en ions calcium soit inférieure à 1000/n mg/l, et l'éluat riche en ions calcium sortant ensuite est amenée, à une concentration en ions calcium supérieure à 1000/n mg/l, à la quantité d'eau saumâtre brute à traiter provenant de l'installation de désalinisation (18).

8. Procédé selon l'une des revendications précédentes, **caractérisé en ce que** la solution contenant du sodium de l'étape c) est formée de l'eau saumâtre partiellement décalcifiée concentrée de l'étape e).

9. Procédé selon l'une des revendications précédentes, **caractérisé en ce que** la séparation de l'éluat de l'étape e) en eau et en eau saumâtre concentrée est effectuée par distillation thermique ou distillation membranaire et concentration à une teneur totale en sel de l'eau saumâtre concentrée 130 à 300 g/l.

10. Dispositif (2) destiné à mettre en oeuvre le procédé selon l'une des revendications 1 à 9, comprenant une installation de désalinisation d'eau de mer (6) destinée à séparer l'eau de mer en eau potable ayant une teneur totale en ions inférieure à 3 g/l et en une eau saumâtre brute ayant une teneur totale en sel supérieure à 60 g/l, et une installation de traitement d'eau saumâtre (14) montée en aval de l'installation de traitement d'eau de mer (6), l'installation de traitement d'eau saumâtre (14) comprenant :

i) une unité de sorption (16) qui est destinée à éliminer partiellement des ions calcium de l'eau saumâtre brute de l'étape d) selon la revendication 1 et qui comporte au moins une première colonne (42) et une autre colonne (68) disposées verticalement et remplies d'une zéolite modifiée thermiquement (TMZ) (86, 88), la TMZ (86,88) pouvant être produite par passage d'une solution ayant une teneur en ions magnésium supérieure à 1 g/l à une température comprise entre 75°C et 100°C à travers les colonnes verticales contenant un remplissage de zéolite A (84),

ii) une unité de désalinisation (18) qui est destinée à séparer l'eau saumâtre partiellement décalcifiée provenant de l'unité de sorption en eau ayant une teneur totale en ions inférieure à 500 mg/l et en eau saumâtre concentrée de l'étape e) selon la revendication 1,

iii) une unité de matières solides (20) destinée à séparer l'eau saumâtre riche en ions calcium plus concentrée en matières solides et en eau ayant une teneur totale en ions inférieure à 500 mg/l de l'étape g) selon la revendication 1,

iv) et au moins trois échangeurs de chaleur (36, 38, 58), un premier et un second échangeur de chaleur (36, 38) étant disposés l'un derrière l'autre et en amont de l'entrée de l'unité de sorption (16) soit en tête de la première colonne (42) soit en tête de l'autre colonne (68) pour éventuellement chauffer l'eau saumâtre brute, le premier échangeur de chaleur étant un récupérateur (36) qui peut être chauffé avec l'eau saumâtre partiellement décalcifiée concentrée provenant de l'unité de désalinisation (16) et le second échangeur de chaleur (38) pouvant être équilibré en température avec de l'eau chauffée ou froide, et le troisième échangeur de chaleur (58) étant disposé en arrière du récupérateur (36) et en amont de l'entrée de l'unité de sorption (16) au choix en bas de la première colonne (42) ou en bas de l'autre colonne (68) et étant conçu pour refroidir l'eau saumâtre concentrée, partiellement décalcifiée et encore chaude, provenant de l'unité de désalinisation, qui quitte le récupérateur (36) et (18) avant l'entrée dans l'unité de sorption (16).

11. Dispositif (2) selon la revendication 10, **caractérisé en ce que** l'unité de désalinisation (18) est formée par une unité de distillation thermique ou de distillation membranaire.

12. Dispositif (2) selon l'une des revendications 10 ou 11, **caractérisé en ce que** l'unité de matières solides (20) est formée par une unité de cristallisation fractionnée ou de cristallisation sous vide fractionnée.

13. Dispositif (2) selon l'une des revendications 10 à 12, **caractérisé en ce qu'**entre l'installation de désalinisation (6) et l'installation de traitement d'eau saumâtre brute (14) est disposée un groupe de prétraitement d'eau saumâtre qui comporte au moins une colonne comportant un granulat, notamment en zéolithe naturelle, destiné à éliminer les matières solides et les ions.

*Fig. 1*

EP 2 681 158 B1

Fig. 2

EP 2 681 158 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010123926 A2
- US 5814224 A
- US 6508936 B1
- WO 2007132477 A1